# EUROPEAN PATENT APPLICATION

(11) **EP 4 848 353 A1**
(43) Date of publication of application: **02.12.2026**
(21) Application number: 24945273.1
(22) Date of filing: 26.09.2024
(51) Int. Cl.: H01M 4/133, H01M 4/134, H01M 10/0525

(54) **BATTERY CELL AND PREPARATION METHOD THEREFOR, SILICON-CARBON MATERIAL AND PREPARATION METHOD THEREFOR, AND ELECTRIC DEVICE**

(30) Priority: 21.06.2024 CN 202410814334
(71) Applicant: Contemporary Amperex Technology (Hong Kong) Limited, Central (HK)
(72) Inventor: SUN, Xin, Ningde, Fujian 352100 (CN); YUN, Liang, Ningde, Fujian 352100 (CN)
(74) Representative: Kraus & Lederer PartGmbB
(86) International application number: PCT/CN2024/121542
(87) International publication number: WO 2025/260543

(57) **Abstract**

A battery cell and a preparation method therefor, a silicon-carbon material and a preparation method therefor, and an electric device. The battery cell comprises a negative electrode sheet, the negative electrode sheet comprises a negative electrode current collector and a negative electrode active material film layer provided on at least one side of the negative electrode current collector, and the negative electrode active material film layer comprises a silicon-carbon material, wherein the average strength of the silicon-carbon material is 2 MPa to 15 MPa, and the powder resistivity of the silicon-carbon material is 1 to 5 Ω·cm. Also provided are a silicon-carbon material and a preparation method therefor, and an electric device comprising the battery cell.

## Description

### CROSS-REFERENCE TO RELATED APPLICATIONS

This application claims priority to Chinese Patent Application No. 202410814334.6, filed on June 21, 2024 and entitled "BATTERY CELL AND PREPARATION METHOD THEREOF, AND ELECTRIC APPARATUS", the entire contents of which are incorporated herein by reference.

### TECHNICAL FIELD

This application pertains to the technical field of battery cells, and specifically relates to a battery cell and a preparation method thereof, a silicon-carbon material and a preparation method thereof, and an electric apparatus.

### BACKGROUND

A battery cell, also known as a rechargeable battery cell, is a battery cell that can be repeatedly discharged and charged for multiple uses. In recent years, with the increasingly widespread application of battery cells represented by lithium-ion battery cells, higher requirements are imposed on their performance, especially cycling performance. For example, battery cells are required to have both high energy density and cycling performance.

However, the current problem is that when the energy density of the battery cell is increased, the cycling performance of the battery cell is greatly affected.

### SUMMARY

This application is intended to provide a battery cell and a preparation method thereof. The battery cell includes a negative electrode sheet, where the negative electrode sheet includes a silicon-carbon material. The silicon-carbon material has appropriate average strength and low powder resistivity. Therefore, a particle breakage rate of the silicon-carbon material during charge-discharge cycles of the battery cell is reduced, helping to maintain the structural stability of a negative electrode active material film layer, thereby improving the volumetric energy density, cycle life, and charge-discharge performance of the battery cell. This application is also intended to provide an electric apparatus including the battery cell, so as to achieve improved volumetric energy density, cycle life, and charge-discharge performance.

According to a first aspect, an embodiment of this application provides a battery cell. The battery cell includes a negative electrode sheet, where the negative electrode sheet includes a negative electrode current collector and a negative electrode active material film layer disposed on at least one side of the negative electrode current collector; the negative electrode active material film layer includes a silicon-carbon material; average strength of the silicon-carbon material is 2 MPa to 15 MPa; and powder resistivity of the silicon-carbon material is 1 Ω·cm to 5 Ω·cm.

The negative electrode sheet according to this embodiment of this application includes the silicon-carbon material. The silicon-carbon material has appropriate average strength, indicating that the silicon-carbon material has appropriate softness and hardness, and the maximum stress that the material can withstand is in an appropriate range. Therefore, during preparation and application of the negative electrode sheet including the silicon-carbon material, a particle breakage rate of the silicon-carbon material is reduced, helping to maintain the structural stability of the negative electrode active material film layer, thereby allowing the battery cell to have a long cycle life.

The powder resistivity of the silicon-carbon material is in the above range, indicating that the silicon-carbon material has good conductivity and helps to improve the charge-discharge performance of the battery cell.

In addition, the negative electrode sheet includes the silicon-carbon material having appropriate average strength, indicating that the negative electrode sheet has appropriate softness. When a high content of silicon-carbon material is added to the negative electrode sheet, the negative electrode active material film layer can have an appropriate compacted density, thereby increasing the volumetric energy density of the battery cell including the negative electrode sheet.

In some optional embodiments, the average strength of the silicon-carbon material is 5 MPa to 8 MPa.

According to these embodiments of this application, the silicon-carbon material has preferable average strength. During preparation and application of the negative electrode sheet including the silicon-carbon material, the particle breakage rate of the silicon-carbon material is further reduced, thereby further extending the cycle life of the battery cell.

In addition, when a high content of silicon-carbon material is added to the negative electrode sheet, the negative electrode active material film layer has an appropriate compacted density, thereby further increasing the volumetric energy density of the battery cell including the negative electrode sheet.

In some optional embodiments, the silicon-carbon material includes a carbon matrix having a porous structure and a silicon-based material located in the porous structure of the carbon matrix.

According to these embodiments of this application, the silicon-based material is deposited on the carbon matrix. The carbon matrix limits the volumetric deformation of the silicon-based material, enhances the structural stability of the silicon-carbon material, and reduces the particle breakage rate in the silicon-carbon material, helping to maintain the structural stability of the negative electrode active material film layer, thereby extending the cycle life of the battery cell.

The type and structure of the silicon-based material are not specifically limited in this application. In some optional embodiments, the silicon-based material includes one or more of elemental silicon, silicon oxide, a silicon-carbon material, and a silicon alloy material.

In some optional embodiments, a tap density of the silicon-carbon material is 0.96 g/cm³ to 1.10 g/cm³, optionally 0.99 g/cm³ to 1.0 g/cm³. When the tap density of the silicon-carbon material is in the above range, the compacted density of the negative electrode active material film layer can be increased, thereby further increasing the energy density of the battery cell. This also allows the negative electrode active material film layer to have an appropriate porous structure, reducing the difficulty of ion liquid-phase transport, improving the electrolyte wettability and retention of a negative electrode film layer, thereby further improving the cycling performance of the battery cell.

In some optional embodiments, a volume-based particle size Dᵥ50 of the silicon-carbon material is 3 µm to 11 µm, optionally 4 µm to 9 µm.

When the volume-based particle size Dᵥ50 of the silicon-carbon material is in the above range, ion intercalation channels in the negative electrode active material film layer can be increased, facilitating rapid diffusion of ions from a particle surface to a bulk phase, thereby further optimizing the cycling performance of the battery cell, and reducing the risk of particle breakage of the silicon-carbon material.

In some optional embodiments, a particle size distribution span SPAN of the silicon-carbon material is 0.9 to 2, optionally 1.2 to 1.8. The particle size distribution span SPAN of the silicon-carbon material falling within the above range allows the negative electrode active material film layer to have an appropriate porosity. The silicon-carbon material has good particle packing performance, helping to increase the compacted density of the negative electrode active material film layer, thereby further increasing the energy density of the battery cell.

In some optional embodiments, average sphericity B of the silicon-carbon material is 0.9 ≤ B < 1, optionally 0.92 to 0.95. The average sphericity of the silicon-carbon material is in the above range, indicating that particles of the silicon-carbon material are nearly spherical, thereby allowing the silicon-carbon material to have more uniform stress distribution. Compared with flake or rod-shaped particles, spherical particles receive more uniform stress during charging and discharging, helping to reduce stress concentration between particles, thereby improving the cycling performance of the battery cell.

In some optional embodiments, for carbon in a Raman spectrum of the silicon-carbon material, a peak intensity ID of a D peak and a peak intensity IG of a G peak satisfy 1.5 < ID/IG < 2.5, where the D peak is located at 1340 cm⁻¹ to 1360 cm⁻¹, and the G peak is located at 1570 cm⁻¹ to 1590 cm⁻¹.

According to these embodiments of this application, the ID/IG of the carbon in the Raman spectrum of the silicon-carbon material is in the above range, indicating that the silicon-carbon material has a high graphitization degree, facilitating intercalation and deintercalation of active ions and increasing the capacity of the silicon-carbon material.

In some optional embodiments, based on a mass percentage, the silicon-carbon material includes 40% to 60% of silicon element and 40% to 60% of carbon element, optionally 47% to 50% of silicon element and 50% to 53% of carbon element.

According to these embodiments of this application, silicon can increase the overall capacity and energy density of the silicon-carbon material, and carbon as a conductive agent helps to improve the conductivity of the battery cell, but its specific capacity is typically relatively low. When the silicon content and carbon content in the silicon-carbon material are in the above ranges, the structural stability of the silicon-carbon material can be maintained, helping to improve the cycling performance. In addition, the overall capacity of the silicon-carbon material and the energy density of the battery cell can be increased.

In some optional embodiments, the negative electrode active material film layer includes graphite, and a mass ratio of the graphite to the silicon-carbon material is 1:(0.66 to 1.5).

According to these embodiments of this application, the graphite is typically a lamellar structure on a microscopic level and has good conductivity and structural stability. The silicon-carbon material has a higher specific capacity, with a volume expansion rate being relatively larger than that of the graphite. When the mass ratio of the graphite to the silicon-carbon material is in the above range, the structural stability of the negative electrode active material film layer can be maintained, helping to improve the cycling performance. In addition, the gram capacity of the negative electrode active material film layer can be increased, improving the energy density and cycling performance of the battery cell.

In some optional embodiments, the negative electrode active material film layer includes a binder and a conductive agent.

In these embodiments of this application, the type of the binder is not obviously limited, and any binder that can be used in a slurry of the negative electrode sheet and has a certain binding effect can be used in these embodiments of this application.

In these embodiments of this application, the type of the conductive agent is not obviously limited, and any conductive agent that can be used in the slurry of the negative electrode sheet and has a good conductive effect can be used in these embodiments of this application.

In some optional embodiments, a compacted density of the negative electrode active material film layer is 1.3 g/cm³ to 1.7 g/cm³, optionally 1.4 g/cm³ to 1.6 g/cm³. When the compacted density of the negative electrode active material film layer is in the above range, the energy density of the battery cell can be further increased. The negative electrode active material film layer includes the silicon-carbon material having an appropriate porous structure, improving the electrolyte wettability and retention of the negative electrode active material film layer, thereby further improving the cycling performance of the battery cell.

In some optional embodiments, an elongation at break of the negative electrode sheet under a pressure of 1.3 MPa to 1.6 MPa is 1.5% to 3%, optionally 2.0% to 2.8%.

During charging and discharging of the battery cell, the electrode sheet undergoes certain expansion and contraction. When the elongation of the negative electrode sheet is in the above range, stress concentration and crack generation in an electrode material can be reduced, thereby improving the cycling performance of the battery cell and the reliability of the electrode sheet. When the elongation of the negative electrode sheet is in the above range, the probability of cracks or fractures occurring at the corners of the electrode sheet can also be reduced, thereby reducing the lithium precipitation at the corners and improving the stability of the battery cell.

In some optional embodiments, to improve the performance of the negative electrode sheet in the battery cell and improve the charge-discharge performance of the battery cell, the battery cell includes an electrolyte, and viscosity of the electrolyte is 2 mPa·s to 15 mPa·s.

In some optional embodiments, to improve the performance of the negative electrode sheet in the battery cell and improve the charge-discharge performance of the battery cell, the battery cell includes an electrolyte, and conductivity of the electrolyte is 9 mS/cm to 15 mS/cm.

The viscosity and conductivity of the electrolyte can be adjusted using conventional methods in the art. In some optional embodiments, the battery cell includes an electrolyte, where the electrolyte includes an acetate compound, and the acetate compound includes one or more of methyl acetate, ethyl acetate, and propyl acetate.

According to a second aspect, an embodiment of this application provides a preparation method of a battery cell, including:
winding an assembly including a negative electrode sheet to obtain a battery cell, where the negative electrode sheet includes a negative electrode current collector and a negative electrode active material film layer disposed on at least one side of the negative electrode current collector; the negative electrode active material film layer includes a silicon-carbon material; average strength of the silicon-carbon material is 2 MPa to 15 MPa; and powder resistivity of the silicon-carbon material is 1 Ω·cm to 5 Ω·cm.

According to this embodiment of this application, the silicon-carbon material having appropriate average strength and powder resistivity is used for the negative electrode sheet, so that during preparation and application of the negative electrode sheet including the silicon-carbon material, the silicon-carbon material has a reduced particle breakage rate, low resistivity, and good conductivity, helping to maintain the structural stability of the negative electrode active material film layer, thereby allowing the battery cell to have a long cycle life.

The powder resistivity of the silicon-carbon material is in the above range, indicating that the silicon-carbon material has good conductivity and helps to improve the charge-discharge performance of the battery cell.

In addition, the negative electrode sheet includes the silicon-carbon material having appropriate average strength. When a high content of silicon-carbon material is added to the negative electrode sheet, the negative electrode active material film layer can have an appropriate compacted density, thereby increasing the volumetric energy density of the battery cell including the negative electrode sheet.

According to a third aspect, an embodiment of this application provides an electric apparatus, including the battery cell according to the first aspect or a battery cell prepared using the preparation method according to the second aspect. The electric apparatus of this application includes the above battery cell and thus has at least the advantages associated with the application of the negative electrode sheet.

### BRIEF DESCRIPTION OF DRAWINGS

To more clearly illustrate the technical solutions of the embodiments of this application, the accompanying drawings to be used in the embodiments of this application will be briefly described below. Apparently, the accompanying drawings described below are only some embodiments of this application. For those of ordinary skill in the art, other accompanying drawings can also be obtained based on these accompanying drawings without creative efforts.
FIG. 1 is a schematic diagram of an embodiment of a battery cell of this application.
FIG. 2 is a schematic exploded view of the battery cell shown in FIG. 1.
FIG. 3 is a schematic diagram of an embodiment of an electric apparatus including a battery cell of this application as a power source.
FIG. 4 is an electron microscope scan image of a silicon-carbon material according to an embodiment of this application.
FIG. 5 is a charge-discharge curve graph of batteries of an example and a comparative example of this application.

In the accompanying drawings, the drawings are not necessarily drawn to actual scale.

Reference signs are described as follows: 5. battery cell; 51. Housing; 52. electrode assembly; and 53. cover plate.

### DESCRIPTION OF EMBODIMENTS

Embodiments that specifically disclose a battery cell and a preparation method thereof, and an electric apparatus in this application are described in detail below with reference to the accompanying drawings as appropriate. However, there may be cases where unnecessary detailed descriptions are omitted. For example, there may be omissions of detailed descriptions of well-known matters and repeated descriptions of actually identical structures. This is to avoid unnecessarily lengthening the following descriptions and to facilitate understanding by those skilled in the art. In addition, the accompanying drawings and the following descriptions are provided for those skilled in the art to fully understand this application and are not intended to limit the subject matter described in the claims.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if lower limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all embodiments and optional embodiments of this application can be combined with each other to form new technical solutions, and such technical solutions should be considered to be included in the disclosure of this application.

Unless otherwise specified, all technical features and optional technical features of this application can be combined with each other to form new technical solutions, and such technical solutions should be considered to be included in the disclosure of this application.

Unless otherwise specified, all steps of this application can be performed sequentially or randomly, preferably sequentially. For example, a method including steps (a) and (b) means that the method may include steps (a) and (b) performed sequentially, or may include steps (b) and (a) performed sequentially. For example, the above-mentioned method may further include step (c), meaning that step (c) can be added to the method in any order. For example, the method may include steps (a), (b), and (c), steps (a), (c), and (b), steps (c), (a), and (b), or the like.

Unless otherwise specified, "include" and "contain" mentioned in this application are inclusive or may be exclusive. For example, "include" and "contain" may indicate that other components not listed may also be included or contained, or only the listed components may be included or contained.

Unless otherwise specified, in this application, the term "or" is inclusive. For example, the phrase "A or B" means "A, B, or both A and B". More specifically, any of the following conditions satisfies the condition "A or B": A is true (or present) and B is false (or absent); A is false (or absent) and B is true (or present); or both A and B are true (or present).

Unless otherwise specified, in this application, the terms "connection" and "join" should be understood in a broad sense, for example, it may be a fixed connection, a detachable connection, or an integral connection, may be a direct connection or an indirect connection through an intermediary, or may be an internal communication of two elements. For those of ordinary skill in the art, the specific meanings of the above terms in this application can be understood according to specific circumstances.

Unless otherwise specified, in this application, the term "attachment" refers to connection by adhesion, coating, or the like.

Unless otherwise specified, in this application, the terms "first", "second", "third", "fourth", and the like are used to distinguish different objects and are not used to describe a specific order or primary-secondary relationship.

Unless otherwise specified, in this application, the term "active ions" refers to ions that can be intercalated and deintercalated between positive and negative electrodes of a battery cell, including but not limited to lithium ions.

In this application, "a plurality of" or "multiple" refers to two or more (including two). In this application, "several items" or "multiple items" refers to two or more items (including two items).

The battery cell mentioned in the embodiments of this application may be a lithium-ion battery cell, a lithium metal battery cell, or the like, which is not limited in the embodiments of this application.

Energy density and cycling performance are two key performance indicators of battery cells. Under normal circumstances, increasing the energy density of a battery cell may lead to degraded cycling performance, or vice versa. This is because when pursuing higher energy density, some materials or structural designs may be needed. Such designs may affect the cycle life of the battery cell. A battery cell with a high energy density has a high electrode sheet compacted density, a large film layer thickness, and a low porosity, which may hinder ion transport and thus adversely affect the cycling performance of the battery cell.

Therefore, how to allow a battery cell with a high energy density to also have good cycling performance is an urgent technical problem to be solved at present.

As an important component of a battery cell, the performance of a negative electrode sheet has a crucial impact on the performance of the battery cell. Currently, graphite is the most commonly used negative electrode active material, but the energy density of a battery cell using the graphite has approached the theoretical value. A silicon-based material has the advantage of high theoretical energy density and can significantly increase the energy density of the battery cell, but the silicon-based material affects the cycling performance of the battery cell and needs to be further improved.

In view of this, the technical solutions of embodiments of this application provide a battery cell and a preparation method thereof, which allows the battery cell to have both high energy density and good cycling performance.

Specifically, embodiments of this application provide a lithium battery cell.

The type of the battery cell is not particularly limited in this application, which may be a battery cell. For example, the battery cell may be a lithium-ion battery cell, a lithium metal battery cell, or the like, which is not limited in the embodiments of this application. Under normal circumstances, the battery cell includes a positive electrode sheet, a negative electrode sheet, an electrolyte, and the like. During charging and discharging of the battery cell, ions are intercalated and deintercalated between the positive electrode sheet and the negative electrode sheet, and the electrolyte plays a role in conducting ions. The type of the electrolyte is not particularly limited in this application, which can be selected according to actual needs. For example, the electrolyte may be at least one selected from a solid-state electrolyte and a liquid-state electrolyte (that is, a liquid electrolyte). Battery cells using liquid electrolytes and some battery cells using solid-state electrolytes may each further include a separator, where the separator is disposed between the positive electrode sheet and the negative electrode sheet and mainly plays a role in isolation.

### Battery cell

According to a first aspect, an embodiment of this application provides a battery cell. The battery cell includes a negative electrode sheet, where the negative electrode sheet includes a negative electrode current collector and a negative electrode active material film layer disposed on at least one side of the negative electrode current collector; the negative electrode active material film layer includes a silicon-carbon material; average strength of the silicon-carbon material is 2 MPa to 15 MPa; and powder resistivity of the silicon-carbon material is 1 Ω·cm to 5 Ω·cm.

Average strength refers to average single-particle strength of a powder material such as the silicon-carbon material. The average single-particle strength refers to an average value of the maximum stress that multiple powder particles can withstand under an external force, which depends on factors such as the shape, size, structure, and composition of powder particles. Different types of powders have different average single-particle strengths.

The negative electrode sheet according to this embodiment of this application includes the silicon-carbon material. The silicon-carbon material has appropriate average strength, indicating that the silicon-carbon material has appropriate softness and hardness, and the maximum stress that the material can withstand is in an appropriate range. Therefore, during preparation and application of the negative electrode sheet including the silicon-carbon material, a particle breakage rate of the silicon-carbon material is reduced, helping to maintain the structural stability of the negative electrode active material film layer, thereby allowing the battery cell to have a long cycle life.

In addition, the negative electrode sheet includes the silicon-carbon material having appropriate average strength. When a high content of silicon-carbon material is added to the negative electrode sheet, the negative electrode active material film layer can have an appropriate compacted density, thereby increasing the volumetric energy density of the battery cell including the negative electrode sheet.

The powder resistivity of the silicon-carbon material is in the above range, indicating that the silicon-carbon material has good conductivity and helps to improve the charge-discharge performance of the battery cell.

The average strength and powder resistivity of the silicon-carbon material are in the above ranges, indicating that the silicon-carbon material is prepared from a specific raw material, such as a petroleum coke raw material.

Optionally, the average strength of the silicon-carbon material is any value of 2 MPa, 2.5 MPa, 3.0 MPa, 3.5 MPa, 4.0 MPa, 4.5 MPa, 5 MPa, 6 MPa, 7 MPa, 8 MPa, 9 MPa, 10 MPa, and 15 MPa, or a range defined by these values.

The average strength can be tested using a test method well known in the art. Exemplarily, the silicon-carbon material powder or the silicon-carbon material containing multiple particles passes through a Japanese Shimazuwa MCT series micro compression testing machine. Two indicators are used to clamp a single-particle sample of the powder therebetween. A diameter d of the single-particle sample is recorded, in mm. The sample is tested in 200 micron increments down to 0.1 micron, with a test compression force of 9.8 mN to 4903 mN, until the silicon-carbon material fractures. An experimental force P at this point is recorded, in N. The average strength is taken as the average value, in MPa. The average strength is equal to 2.8 × P / (πd²).

In some optional embodiments, the average strength of the silicon-carbon material is 5 MPa to 8 MPa.

According to these embodiments of this application, the silicon-carbon material has preferable average strength. During preparation and application of the negative electrode sheet including the silicon-carbon material, the particle breakage rate of the silicon-carbon material is further reduced, thereby further extending the cycle life of the battery cell.

In addition, when a high content of silicon-carbon material is added to the negative electrode sheet, the negative electrode active material film layer has an appropriate compacted density, thereby further increasing the volumetric energy density of the battery cell including the negative electrode sheet.

In some optional embodiments, the powder resistivity of the silicon-carbon material is 1.2 Ω·cm to 2 Ω·cm. The powder resistivity of the silicon-carbon material is in the above range, indicating that the silicon-carbon material has good conductivity and helps to improve the charge-discharge performance of the battery cell.

The powder resistivity of the silicon-carbon material has a meaning well known in the art and can be tested using instruments and methods known in the art. For example, a resistivity tester (such as an ST2722 powder resistivity tester from Suzhou Jingge Electronics Co., Ltd.) can be used for testing. During testing, 1 g of powder sample can be taken. Then, the powder sample is placed between electrodes of the resistivity tester, pressed by an electronic press at a constant pressure to a test pressure (for example, 4 MPa), and maintained for 15s to 25s to obtain a sheet-like sample. The powder resistivity δ of the material is calculated according to the formula δ = (S × R) / h, in Ω·cm, where h represents a height of the sheet-like sample, in cm; R represents resistance, in Ω; and S represents an area of the sheet-like sample, in cm².

In some optional embodiments, the silicon-carbon material includes a carbon matrix having a porous structure and a silicon-based material located in the porous structure of the carbon matrix.

According to these embodiments of this application, the silicon-based material is deposited on the carbon matrix. The carbon matrix limits the volumetric deformation of the silicon-based material, enhances the structural stability of the silicon-carbon material, and reduces the particle breakage rate in the silicon-carbon material, helping to maintain the structural stability of the negative electrode active material film layer, thereby extending the cycle life of the battery cell.

The carbon matrix having a porous structure in the silicon-carbon material and the silicon-based material deposited inside the porous structure can be comprehensively determined by transmission electron microscopy and XPS element detection.

The type and structure of the silicon-based material are not specifically limited in this application. In some optional embodiments, the silicon-based material includes one or more of elemental silicon, silicon oxide, a silicon-carbon material, and a silicon alloy material.

In some optional embodiments, a tap density of the silicon-carbon material is 0.96 g/cm³ to 1.10 g/cm³, optionally 0.99 g/cm³ to 1.07 g/cm³.

The silicon-carbon material has rounded corners, helping to increase the tap density of the silicon-carbon material. When the tap density of the silicon-carbon material is in the above range, the compacted density of the negative electrode active material film layer can be increased, thereby further increasing the energy density of the battery cell. This also allows the negative electrode active material film layer to have an appropriate porous structure, reducing the difficulty of ion liquid-phase transport, improving the electrolyte wettability and retention of the negative electrode film layer, thereby further improving the cycling performance of the battery cell.

The tap density of the silicon-carbon material has a meaning well known in the art and can be tested using instruments and methods known in the art. For example, the tap density of the silicon-carbon material can be tested using a powder tap density tester with reference to GB/T 5162-2006, where a test instrument may be the Dandong Bettersize BT-301; and test parameters are as follows: a vibration frequency is 250 ± 15 times/min, an amplitude is 3 ± 0.2 mm, the number of vibrations is 3, and a capacity of a graduated cylinder is 25 mL.

In some optional embodiments, a volume-based particle size Dᵥ50 of the silicon-carbon material is 3 µm to 11 µm, optionally 4 µm to 9 µm.

When the volume-based particle size Dᵥ50 of the silicon-carbon material is in the above range, ion intercalation channels in the negative electrode active material film layer can be increased, facilitating rapid diffusion of ions from a particle surface to a bulk phase, thereby further optimizing the cycling performance of the battery cell, and reducing the risk of particle breakage of the silicon-carbon material.

In some optional embodiments, a particle size distribution span SPAN of the silicon-carbon material is 0.9 to 2, optionally 1.2 to 1.8. The particle size distribution span SPAN of the silicon-carbon material falling within the above range allows the silicon-carbon material to have good particle packing performance, allowing the negative electrode active material film layer to have an appropriate porosity, and helping to increase the compacted density of the negative electrode active material film layer, thereby further increasing the energy density of the battery cell.

The particle size distribution span SPAN is a parameter describing a particle size distribution range, which reflects the breadth of the particle size distribution. SPAN = (Dᵥ90 - Dᵥ10) / Dᵥ50, where Dᵥ50 represents a particle size greater than 50% of a particle volume distribution (that is, a median particle size), and Dᵥ90 and Dᵥ10 represent particle sizes greater than 90% and 10% of the particle volume distribution, respectively.

The volume distribution particle sizes Dᵥ10, Dᵥ50, and Dᵥ90 of the silicon-carbon material have meanings well known in the art, which respectively represent the particle sizes corresponding to the cumulative volume distribution percentages of the material reaching 10%, 50%, and 90%, and can be tested using instruments and methods known in the art. For example, Dᵥ10, Dᵥ50, and Dᵥ90 can be tested using a laser particle size analyzer with reference to GB/T 19077-2016, where a test instrument may be a Mastersizer 3000 laser particle size analyzer from Malvern Instruments Ltd., UK.

In some optional embodiments, average sphericity B of the silicon-carbon material is 0.9 ≤ B < 1, optionally 0.92 to 0.95.

Sphericity refers to a ratio of a minimum diameter to a maximum diameter of a particle. When the morphology of a particle is closer to a sphere, the sphericity of the particle is closer to 1. The average sphericity refers to an average value of the sphericity of the silicon-carbon material in the negative electrode active material.

The average sphericity of the silicon-carbon material is in the above range, indicating that the particles of the silicon-carbon material are nearly spherical, thereby allowing the silicon-carbon material to have a more uniform stress distribution. Compared with flake or rod-shaped particles, spherical particles receive more uniform stress during charging and discharging, helping to reduce stress concentration between particles, thereby improving the cycling performance of the battery cell.

The average sphericity of the silicon-carbon material can be tested using methods well known in the art. As an example, the average sphericity of the silicon-carbon material can be characterized using a Morphologi G3-ID instrument from Malvern Company and its accompanying image software and Raman attachment.

In some optional embodiments, for carbon in a Raman spectrum of the silicon-carbon material, a peak intensity ID of a D peak and a peak intensity IG of a G peak satisfy 1.5 < ID/IG < 2.5, where the D peak is located at 1340 cm⁻¹ to 1360 cm⁻¹, and the G peak is located at 1570 cm⁻¹ to 1590 cm⁻¹.

According to these embodiments of this application, the ID/IG of the carbon in the Raman spectrum of the silicon-carbon material is in the above range, indicating that the silicon-carbon material has a high graphitization degree, facilitating intercalation and deintercalation of active ions and increasing the capacity of the silicon-carbon material.

The peak intensity ID of the D peak and the peak intensity IG of the G peak of the carbon in the Raman spectrum of the silicon-carbon material can be detected using an NGSLabspec type Raman spectrometer, with a scanning range of 100 cm⁻¹ to 3200 cm⁻¹. As an example, a test method of a graphitization intensity of the silicon-carbon material refers to a test method of a graphitization intensity of the carbon matrix in the silicon-carbon material as follows: A silicon-carbon material sample is smeared or dropped on a glass slide, focused, and scanned using a Raman spectrometer according to the following parameters: a signal-to-noise ratio being a signal-to-noise ratio of monocrystalline silicon is greater than or equal to 30:1, a wavenumber range is 100 cm⁻¹ to 3200 cm⁻¹, a resolution is 1 cm⁻¹, a repetition rate is 0.05 cm⁻¹, and a value of I_{D}/I_{G} is tested.

In some optional embodiments, based on a mass percentage, the silicon-carbon material includes 40% to 60% of silicon element and 40% to 60% of carbon element, optionally 47% to 50% of silicon element and 50% to 53% of carbon element.

According to these embodiments of this application, silicon can increase the overall capacity and energy density of the silicon-carbon material, and carbon as a conductive agent helps to improve the conductivity of the battery cell, but its specific capacity is typically relatively low. When the silicon content and carbon content in the silicon-carbon material are in the above ranges, the structural stability of the silicon-carbon material can be maintained, helping to improve the cycling performance. In addition, the overall capacity of the silicon-carbon material and the energy density of the battery cell can be increased.

In some optional embodiments, the silicon-carbon material includes:
a carbon matrix having a porous structure, where the carbon matrix includes a silicon-based material located in the porous structure; and
a carbon coating layer at least partially coating a surface of the carbon matrix.

According to these embodiments of this application, the silicon-based material is located in the carbon matrix. The carbon matrix limits the volumetric deformation of the silicon-based material, enhances the structural stability of the silicon-carbon material, and reduces a volume change rate of the silicon-based material, helping to maintain the structural stability of the negative electrode active material film layer, and improving the cycling performance of the battery cell and the reliability of the battery cell. The presence of the carbon coating layer helps to reduce a contact area between the silicon-carbon material and the electrolyte, reducing the risk of lithium precipitation. The presence of the carbon coating layer also helps to maintain the performance stability of the silicon-carbon material, facilitating storage and transportation of the silicon-carbon material.

Whether the surface of the silicon-carbon material has the carbon coating layer can be determined by transmission electron microscopy.

The carbon coating layer of the silicon-carbon material, the carbon matrix having the porous structure, and the silicon-based material inside the porous structure can be comprehensively determined by transmission electron microscopy and XPS element detection, respectively.

The type and structure of the silicon-based material are not specifically limited in this application. In some optional embodiments, the silicon-based material includes one or more of elemental silicon, silicon oxide, a silicon-carbon composite material, and a silicon alloy material.

In some optional embodiments, the negative electrode active material film layer includes graphite, where the graphite may include artificial graphite and natural graphite. The graphite is a material with good conductivity and chemical stability, which can adsorb and release active ions, such as lithium ions. The active ions are intercalated into or deintercalated from graphite lattices to implement charging and discharging of the battery cell. The graphite has a stable crystal structure, which can maintain the shape and stability of an electrode, helping to extend the service life of the battery cell and improve the cycling stability.

Compared to the graphite, the silicon-carbon material has excellent gram capacity and larger volume change rate due to the presence of silicon element.

In some optional embodiments, the negative electrode active material film layer includes graphite, and a mass ratio of the graphite to the silicon-carbon material is 1:(0.66 to 1.5).

According to these embodiments of this application, the graphite is typically a lamellar structure on a microscopic level and has good conductivity and structural stability. The silicon-carbon material has a higher specific capacity, with a volume expansion rate being relatively larger than that of the graphite. When the mass ratio of the graphite to the silicon-carbon material is in the above range, the structural stability of the negative electrode active material film layer can be maintained, helping to improve the cycling performance. In addition, the gram capacity of the negative electrode active material film layer can be increased, improving the energy density and cycling performance of the battery cell.

In some optional embodiments, the negative electrode active material film layer includes a binder and a conductive agent.

In these embodiments of this application, the type of the binder is not obviously limited, and any binder that can be used in the negative electrode active material film layer of the negative electrode sheet and has a certain binding effect can be used in these embodiments of this application. In some optional embodiments, the negative electrode active material film layer includes a binder, where optionally, the binder includes one or more of carboxymethyl cellulose, polyacrylic acid and modified products thereof, polyacrylamide and modified products thereof, polyvinyl alcohol and modified products thereof, polyacrylonitrile and modified products thereof, polyethyleneimine and modified products thereof, styrene-butadiene rubber and modified products thereof, styrene-acrylic emulsion and modified products thereof, polyacrylate and modified products thereof, polyurethane and modified products thereof, sodium alginate and modified products thereof, guar gum and modified products thereof, xanthan gum and modified products thereof, gum arabic and modified products thereof, β-cyclodextrin polymer, and carrageenan and modified products thereof. In some optional embodiments, the negative electrode active material film layer includes a thickener. The thickener may be carboxymethyl cellulose and salts thereof.

In these embodiments of this application, the type of the conductive agent is not obviously limited, and any conductive agent that can be used in the negative electrode active material film layer of the negative electrode sheet and has a good conductive effect can be used in embodiments of this application. To further improve the conductivity of the negative electrode sheet and reduce the internal resistance of the negative electrode sheet, in some optional embodiments, the conductive agent includes one or more of carbon nanotubes, graphene, carbon nanofiber, superconducting carbon, conductive graphite, acetylene black, carbon black, Ketjen black, and carbon dots.

In some optional embodiments, a compacted density of the negative electrode active material film layer is 1.3 g/cm³ to 1.7 g/cm³, optionally 1.4 g/cm³ to 1.6 g/cm³. The silicon-carbon material in the negative electrode active material film layer has rounded corners, helping to increase the compacted density of the negative electrode active material film layer. When the compacted density of the negative electrode active material film layer is in the above range, the energy density of the battery cell can be further increased. The negative electrode active material film layer includes the silicon-carbon material having an appropriate porous structure, improving the electrolyte wettability and retention of the negative electrode active material film layer, thereby further improving the cycling performance of the battery cell.

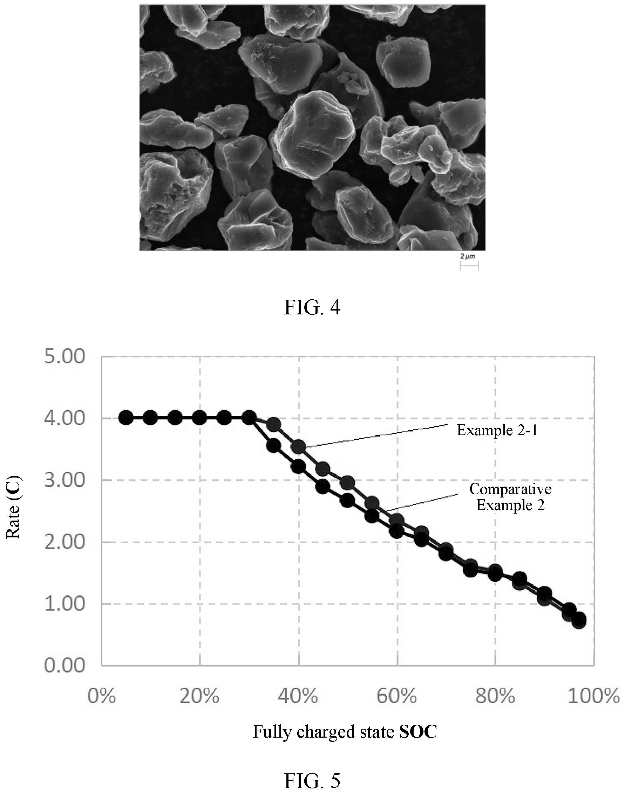

Referring to FIG. 4 which is an electron microscope scan image of a silicon-carbon material according to an embodiment of this application. Particles of the silicon-carbon material have rounded corners, helping to increase a compacted density of a negative electrode active material film layer.

An areal density of the negative electrode active material film layer has a meaning well known in the art and can be tested using methods known in the art. For example, a single-sided coated and cold-pressed negative electrode sheet may be taken (if the negative electrode sheet is a double-sided coated negative electrode sheet, a negative electrode active material film layer on one side can be wiped off first), and punched into a small disc with an area of S1. Then, a weight is measured and recorded as M1. Then, the negative electrode active material film layer of the above weighed negative electrode sheet is wiped off, and a weight of a negative electrode current collector is measured and recorded as M0. An areal density of the negative electrode sheet is equal to (M1 - M0) / S1.

The compacted density of the negative electrode active material film layer has a meaning well known in the art and can be tested using methods known in the art. The compacted density of the negative electrode active material film layer is equal to the areal density of the negative electrode active material film layer / thickness of the negative electrode active material film layer. The thickness of the negative electrode active material film layer has a meaning well known in the art and can be measured using methods known in the art, for example, using a micrometer (such as a Mitutoyo 293-100 micrometer with an accuracy of 0.1 µm).

In some optional embodiments, an elongation at break of the negative electrode sheet under a pressure of 1.3 MPa to 1.6 MPa is 1% to 3.5%, optionally any value of 1.00%, 0.5%, 1.0%, 1.5%, 2.0%, 2.5%, 3.0%, and 3.5% or a range defined by these values. When the elongation at break of the negative electrode sheet is in the above range, the flexibility of the electrode sheet can be improved, reducing the probability of brittle fracture of the electrode sheet, thereby improving the reliability of the battery.

During charging and discharging of the battery cell, the electrode sheet undergoes certain expansion and contraction. When the elongation of the negative electrode sheet is in the above range, stress concentration and crack generation in the electrode material can be reduced, thereby improving the cycling performance of the battery cell and the reliability of the electrode sheet. When the elongation of the negative electrode sheet is in the above range, the probability of cracks or fractures occurring at the corners of the electrode sheet can also be reduced, thereby reducing the lithium precipitation at the corners and increasing the volumetric energy density of the battery cell.

The elongation at break of the negative electrode sheet has a meaning well known in the art, abbreviated as elongation, and can be tested using methods known in the art. For example, a test method of the elongation at break of the negative electrode sheet is as follows: A negative electrode sheet is taken out from a cell, an electrolyte is added such that the electrode sheet is completely immersed in the electrolyte, and the electrode sheet is stored in the electrolyte at 90°C for more than 48 h. Then, the electrode sheet is taken out, and a film layer of the negative electrode sheet can be peeled off from a current collector. The negative electrode sheet is taken and the current collector is removed, and the film layer after removal of the current collector is made into a sample with a width of 15 mm and a length of 50 mm. An air pressure of a device is set to 2 MPa. Then, the sample is fixed on a tensile machine (model AI7000), with one layer of yellow Teflon pasted on upper and lower clamps, and the yellow Teflon is replaced once per shift to prevent slippage of the electrode sheet. An initial length is recorded as L0. The tensile machine is started for testing. Testing is performed under a pressure of 1.3 MPa to 1.6 MPa until the sample fractures. A displacement L1 of the sample at fracture is read from the tensile machine. The elongation is equal to (L1 - L0) / L0 * 100%.

In some optional embodiments, to improve the performance of the negative electrode sheet in the battery cell and improve the charge-discharge performance of the battery cell, the battery cell includes an electrolyte, and viscosity of the electrolyte is 2 mPa·s to 15 mPa·s. The viscosity of the electrolyte is any value of 2 mPa·s, 3 mPa·s, 4 mPa·s, 5 mPa·s, 6 mPa·s, 7 mPa·s, 8 mPa·s, 9 mPa·s, 10 mPa·s, 11 mPa·s, 12 mPa·s, 13 mPa·s, 14 mPa·s, and 15 mPa·s, or a range defined by these values.

The viscosity of the electrolyte can be tested as follows: At a certain temperature, a shear force received by a rotor rotating continuously at a constant speed in the sample causes a spring to produce a torque, and the torque is proportional to the viscosity, thereby obtaining a viscosity value. Specifically, a Brookfield (DV-2TLV) viscometer is used to test the viscosity of the finished electrolyte. The ambient temperature is controlled at 25°C, and the ambient humidity is controlled to be less than 80%. Then, 30 mL of electrolyte is taken and kept in a water bath for at least 30 min at a constant temperature of 25°C. The rotor is installed in a sample cup, the sample is added to about 0.3 cm from the cup mouth, the connected viscometer is started, and 70 RPM is selected.

In some optional embodiments, to improve the performance of the negative electrode sheet in the battery cell and improve the charge-discharge performance of the battery cell, the battery cell includes an electrolyte, and conductivity of the electrolyte is 9 mS/cm to 15 mS/cm. Optionally, the conductivity of the electrolyte may be any value of 9 mS/cm, 10 mS/cm, 11 mS/cm, 12 mS/cm, 13 mS/cm, 14 mS/cm, and 15 mS/cm, or a range defined by these values.

Ionic conductivity refers to the conductivity of the electrolyte to ions, which can reflect the electrical conductivity of the electrolyte to ions.

The ionic conductivity is tested as follows: About 100 mL of electrolyte sample is taken in a dry, clean, corrosion-resistant sample bottle, sealed and placed in a constant-temperature water bath, and shaken occasionally until the constant temperature is kept at 25°C (with a deviation of ±0.5°C). After the sample temperature is constant, a commercially available conductivity meter is used to test the conductivity of the sample. The conductivity meter is cleaned and dried with a calibration solution, then vertically inserted into the liquid to be tested, the test is started by clicking, and a test result is recorded after the data is stable for more than 10s.

The lithium secondary battery provided in this application has ionic conductivity in the above range and thus has good fast charging performance.

The viscosity and conductivity of the electrolyte can be adjusted using conventional methods in the art. In some optional embodiments, the battery cell includes an electrolyte, where the electrolyte includes an acetate compound, and the acetate compound includes one or more of methyl acetate, ethyl acetate, and propyl acetate.

In some optional embodiments, the negative electrode current collector may adopt a metal foil or a composite current collector. As an example of the metal foil, a copper foil may be adopted. The composite current collector may include a polymer material substrate and a metal material layer formed on at least one surface of the polymer material substrate. As an example, the metal material may include one or more of copper, copper alloy, nickel, nickel alloy, titanium, titanium alloy, silver, and silver alloy. As an example, the polymer material substrate may include one or more of polypropylene (PP), polyethylene terephthalate (PET), polybutylene terephthalate (PBT), polystyrene (PS), and polyethylene (PE).

The negative electrode sheet does not exclude other additional functional layers besides the negative electrode active material film layer. For example, in some optional embodiments, the negative electrode sheet of this application further includes a conductive primer layer sandwiched between the negative electrode current collector and the negative electrode active material film layer and disposed on a surface of the negative electrode current collector (for example, the conductive primer layer includes a conductive agent and a binder). In some optional embodiments, the negative electrode sheet of this application further includes a protective layer covering a surface of the negative electrode active material film layer.

The negative electrode current collector has two opposite surfaces in its thickness direction, and the negative electrode active material film layer is disposed on either or both of the two opposite surfaces of the negative electrode current collector. It should be noted that various parameters (such as the compacted density, the areal density, and the porosity) of the negative electrode active material film layers given in this application all refer to parameters of the negative electrode active material film layer on one side of the negative electrode current collector. When the negative electrode active material film layer is disposed on both sides of the negative electrode current collector, if the parameters of the negative electrode active material film layer on any one side satisfy this application, the negative electrode active material film layer is considered to fall within the protection scope of this application.

In some optional embodiments, a thickness of the negative electrode active material film layer is 50 µm to 250 µm, optionally, 50 µm to 150 µm. Controlling the thickness of the negative electrode active material film layer in the above range helps to increase the gram capacity of the negative electrode sheet and increase the energy density of the battery cell while ensuring the stability of the negative electrode sheet.

The specific composition, structure, and the like of the negative electrode sheet can be selected according to the type of the battery cell, which are not limited in the embodiments of this application.

For example, when the battery cell is a lithium-ion battery cell, the negative electrode sheet includes a negative electrode current collector and a negative electrode active material film layer disposed on at least one surface of the negative electrode current collector and including a negative electrode active material. For example, the negative electrode current collector has two opposite surfaces in its thickness direction, and the negative electrode active material film layer is disposed on either or both of the two opposite surfaces of the negative electrode current collector.

The negative electrode active material is a material capable of deintercalating and intercalating active ions (such as lithium ions), and the negative electrode active material can adopt materials well known in the art. As an example, the negative electrode active material includes but is not limited to one or more of soft carbon, hard carbon, a tin-based material, and lithium titanate. The tin-based material may include one or more of elemental tin, tin oxide, and a tin alloy material. This application is not limited to these materials, and other conventional well-known materials that can be used as negative electrode active materials can also be used.

The negative electrode active material film layer is typically formed by applying a negative electrode slurry on the negative electrode current collector, followed by drying and cold pressing. The negative electrode slurry is typically formed by dispersing a negative electrode active material, an optional conductive agent, an optional binder, and other optional auxiliaries in a solvent and stirring well. The solvent may be N-methylpyrrolidone (NMP) or deionized water, but is not limited thereto.

It should be noted that the various parameter tests for the above silicon-carbon material, graphite, or negative electrode active material film layer can be sampled and tested from the prepared battery cell according to the following steps.

The battery cell is discharged (for safety reasons, the battery cell is generally placed in a fully discharged state). After the battery cell is disassembled, the negative electrode sheet is taken out, and the negative electrode sheet is immersed in dimethyl carbonate for a certain time (for example, 2 h to 10 h). Then, the negative electrode sheet is taken out and dried at a certain temperature for a certain time (for example, at 60°C for more than 4 h). After dried, the negative electrode sheet is taken out. At this point, the above parameters related to the negative electrode active material film layer, such as the areal density, compacted density, and porosity of the negative electrode active material film layer, can be sampled and tested from the dried negative electrode sheet.

### Preparation method of battery cell

According to a second aspect, an embodiment of this application provides a preparation method of a battery cell, including:
winding an assembly including a negative electrode sheet to obtain a battery cell, where the negative electrode sheet includes a negative electrode current collector and a negative electrode active material film layer disposed on at least one side of the negative electrode current collector; the negative electrode active material film layer includes a silicon-carbon material; average strength of the silicon-carbon material is 2 MPa to 15 MPa; and powder resistivity of the silicon-carbon material is 1 Ω·cm to 5 Ω·cm.

According to this embodiment of this application, the silicon-carbon material having appropriate average strength and powder resistivity is used for the negative electrode sheet, so that during preparation and application of the negative electrode sheet including the silicon-carbon material, the silicon-carbon material has a reduced particle breakage rate, low powder resistivity, and good conductivity, helping to maintain the structural stability of the negative electrode active material film layer, thereby allowing the battery cell to have a long cycle life.

The powder resistivity of the silicon-carbon material is in the above range, indicating that the silicon-carbon material has good conductivity and helps to improve the charge-discharge performance of the battery cell.

In addition, the negative electrode sheet includes the silicon-carbon material having appropriate average strength. When a high content of silicon-carbon material is added to the negative electrode sheet, the negative electrode active material film layer can have an appropriate compacted density, thereby increasing the volumetric energy density of the battery cell including the negative electrode sheet.

### Preparation method of negative electrode sheet

An embodiment of this application provides a preparation method of a negative electrode sheet, including the following steps.

S10. Carbonize a coke raw material to prepare a carbon substrate.

S20. Perform pore-forming treatment on the carbon substrate to obtain a carbon matrix having a porous structure.

S30. Deposit silicon in the porous structure of the carbon matrix to prepare a silicon-carbon material, where powder resistivity of the silicon-carbon material is 1 Ω·cm to 5 Ω·cm.

S40. Provide a slurry including the silicon-carbon material.

S50. Apply the slurry on a negative electrode current collector to form a negative electrode active material film layer so as to obtain a negative electrode sheet.

According to this embodiment of this application, the coke raw material may be petroleum coke raw material. The coke raw material is carbonized to prepare the carbon substrate, so that the prepared carbon substrate has a high graphitization degree, appropriate softness and hardness, and the maximum stress that the material can withstand is in an appropriate range. The carbon substrate is subjected to pore-forming treatment and silicon deposition treatment, so that the prepared silicon-carbon material has appropriate average strength. Therefore, during preparation and application of the negative electrode sheet including the silicon-carbon material, a particle breakage rate of the silicon-carbon material is reduced, helping to maintain the structural stability of the negative electrode active material film layer, thereby allowing the battery cell to have a long cycle life.

In addition, the negative electrode sheet includes graphite and the silicon-carbon material having appropriate average strength. When a high content of silicon-carbon material is added to the negative electrode sheet, the negative electrode active material film layer can have an appropriate compacted density, thereby increasing the volumetric energy density of the battery cell including the negative electrode sheet.

In some optional embodiments, corners of the carbon substrate can be shaped to make the corners of the carbon substrate rounded, which facilitates the subsequent preparation of a silicon-carbon material with high sphericity.

In some optional embodiments, in S10, the coke raw material is a petroleum coke type raw material.

In some embodiments, the type of the coke raw material and parameters such as Dᵥ50 can be adjusted, so that the coke raw material falling within the given range helps to improve the subsequent shaping and granulation processes, thereby allowing the finally obtained carbon matrix to have an appropriate volume-based particle size.

The coke raw material can be directly purchased or obtained by crushing a coke material, which may be petroleum coke. In some embodiments, the coke material can be crushed to adjust parameters such as Dᵥ50 of the coke raw material within the desired ranges. Devices and methods known in the art can be used to crush the coke material, such as air mills, mechanical mills, or roll mills. The crushing process often produces many excessively small particles, and sometimes excessively large particles, so after crushing, classification treatment can be performed as needed to remove excessively small particles and excessively large particles from the crushed powder. After classification treatment, a coke raw material with the desired particle size distribution can be obtained. The classification treatment can be performed using devices and methods known in the art, such as classification screens, gravity classifiers, and centrifugal classifiers.

In some embodiments, in S10, the process of carbonizing the coke raw material to prepare the carbon substrate may include the following steps:
(a) providing the coke raw material; and
(b) performing carbonization treatment on the coke raw material to obtain the carbon substrate.

The coke material crushing treatment can be carried out in a process unit including a pulverizer, a classifier, and an induced draft fan. During the crushing process, parameters such as Dᵥ50 of the obtained coke raw material can be adjusted within the desired ranges by controlling the feeding frequency, crushing frequency, classification frequency, and induced draft frequency. Compared with a conventional crushing process with low classification frequency, the method of this application can improve the classification frequency, helping to remove excessively small particles.

In some embodiments, the coke raw material may include one or more of petroleum-based non-needle coke and petroleum-based needle coke. Optionally, the coke raw material includes petroleum green coke.

The volatile content of the coke raw material can be tested using methods known in the art. For example, the volatile content of the coke raw material can be tested with reference to SH/T 0026-1990.

In some embodiments, in step (b), shaping can be performed to polish the edges and corners of coke raw material particles, facilitating the subsequent granulation process, and allowing secondary particles in the obtained negative electrode active material to have high structural stability. Devices and methods known in the art can be used to shape the coke raw material, such as shaping machines or other shaping devices.

In some embodiments, after shaping the coke raw material, further classification treatment is performed to ensure that the final silicon-carbon material has an appropriate particle size and other parameters. Devices and methods known in the art can be used to perform the classification treatment, such as classification screens, gravity classifiers, and centrifugal classifiers.

The shaping and classification treatment can be carried out in a process unit including a shaping machine, a classifier, and an induced draft fan. During the shaping and classification treatment process, parameters such as Dᵥ50 of the obtained precursor can be adjusted within the desired range by controlling the shaping frequency (for example, the main machine frequency and auxiliary machine frequency of the shaping machine), classification frequency, and induced draft frequency. Compared with conventional shaping and classification processes, the method of this application improves the shaping frequency during the treatment process, appropriately extends the shaping time, and also reduces the classification frequency and induced draft frequency during the treatment process, so that Dᵥ50 and the like of the obtained precursor are controlled within target ranges.

In the above preparation process, the coke raw material typically contains some impurity elements (such as iron, nickel, chromium, zinc, sulfur, and silicon), and devices used in the crushing, shaping, and granulation processes also introduce some impurity elements (such as iron and copper). Generally, the content of impurity elements in a core is minimal, typically less than 1 ppm.

In some embodiments, the carbon substrate can be ball-milled to adjust its sphericity and so on.

In some optional embodiments, in S10, the coke raw material is carbonized at a temperature of 900°C to 1100°C to prepare the carbon substrate. The carbonization temperature may be any value of 900°C, 950°C, 1000°C, 1050°C, and 1100°C, or a range defined by these values. Carbonizing the coke raw material within the above temperature range can obtain a carbon substrate with a high graphitization degree, which facilitates the subsequent preparation of the silicon-carbon material.

In some optional embodiments, in S10, the process of carbonizing the coke raw material at the temperature of 900°C to 1100°C to prepare the carbon substrate may specifically include: carbonizing at the temperature of 900°C to 1100°C, chemically activating under an alkaline condition for 6 h to 8 h in a protective atmosphere, and then filling carbon dioxide for physical activation for 10 h to 12 h. The protective atmosphere may be a nitrogen protective atmosphere, and the alkaline condition can be adjusted by adding substances such as NaOH.

In some optional embodiments, in S20, an average value of single-particle strength of the carbon matrix is 1 MPa to 5 MPa, optionally 3 MPa to 4 MPa. The average strength of the carbon matrix falling within the above range allows the prepared silicon-carbon material to have appropriate average strength. During preparation and application of the negative electrode sheet including the silicon-carbon material, a particle breakage rate of the silicon-carbon material is reduced, helping to maintain the structural stability of the negative electrode active material film layer, thereby allowing the battery cell to have a long cycle life.

In some optional embodiments, in S20, a tap density of the carbon matrix is 0.2 kg/m³ to 0.4 kg/m³, optionally 0.25 kg/m³ to 0.35 kg/m³. The tap density of the carbon matrix falling within the above range helps to prepare a silicon-carbon material with an appropriate tap density after silicon deposition, thereby increasing the compacted density of the negative electrode active material film layer, further increasing the energy density of the battery cell and also helping to further improve the cycling performance of the battery cell.

In some optional embodiments, in S20, a volume-based particle size Dᵥ50 of the carbon matrix is 3 µm to 11 µm, optionally 4 µm to 9 µm. The volume-based particle size Dᵥ50 of the carbon matrix falling within the above range helps to prepare a silicon-carbon material with an appropriate volume-based particle size Dᵥ50. The silicon-carbon material has good particle packing performance, allowing the negative electrode active material film layer to have an appropriate porosity, and helping to increase the compacted density of the negative electrode active material film layer, thereby further increasing the energy density of the battery cell.

In some optional embodiments, in S20, a particle size distribution span SPAN of the carbon matrix is 0.9 to 2. The particle size distribution span SPAN of the carbon matrix falling within the above range helps to prepare a silicon-carbon material with an appropriate volume-based particle size Dᵥ50. The carbon material has good particle packing performance, allowing the negative electrode active material film layer to have an appropriate porosity; and silicon helps to increase the compacted density of the negative electrode active material film layer, thereby further increasing the energy density of the battery cell.

In some optional embodiments, in a Raman spectrum of the carbon matrix, a peak intensity ID of a D peak and a peak intensity IG of a G peak satisfy 1.5 < ID/IG < 2.5, optionally 1.8 to 2.0, where the D peak is located at 1340 cm⁻¹ to 1360 cm⁻¹; and the G peak is located at 1570 cm⁻¹ to 1590 cm⁻¹. According to these embodiments of this application, the ID/IG of the carbon in the Raman spectrum of the carbon matrix is in the above range, indicating that the carbon matrix has a high graphitization degree, facilitating intercalation and deintercalation of active ions and increasing the capacity of the silicon-carbon material.

In some optional embodiments, in S20, average sphericity A of the carbon matrix is 0.8 ≤ A < 1, optionally 0.92 to 0.95.

Sphericity refers to a ratio of a minimum diameter to a maximum diameter of a particle. When the morphology of a particle is closer to a sphere, the sphericity of the particle is closer to 1. The average sphericity refers to an average value of the sphericity of the carbon matrix and can be measured by the foregoing method for measuring the sphericity of the silicon-carbon material.

The average sphericity of the carbon matrix is in the above range, indicating that particles of powder of the carbon matrix are nearly spherical, thereby allowing the carbon matrix to have a more uniform stress distribution. Compared with flake or rod-shaped particles, spherical particles receive more uniform stress during charging and discharging, helping to reduce stress concentration between particles, thereby improving the cycling performance of the battery cell.

In some optional embodiments, in S20, a specific surface area of the carbon matrix is 1900 m²/g to 2500 m²/g. The specific surface area of the carbon matrix falling within the above range facilitates silicon deposition on the carbon matrix, allowing the prepared silicon-carbon material to have an appropriate specific surface area, increasing ion intercalation channels in the negative electrode active material film layer, and facilitating rapid diffusion of ions from a particle surface to a bulk phase, thereby further optimizing the fast charging performance of the battery cell. In addition, the specific surface area of the carbon matrix falling within the above range allows the prepared silicon-carbon material to have an appropriate specific surface area, helping to reduce side reactions, thereby allowing the battery cell to have better cycling performance.

The specific surface area of such carbon matrix material is a meaning well known in the art and can be tested using instruments and methods known in the art. For example, the specific surface area can be tested using a nitrogen adsorption specific surface area analysis test method with reference to GB/T 19587-2017, and calculated by a BET (Brunauer Emmett Teller) method. The test instrument may be a Tri-Star 3020 specific surface area and pore size analyzer from Micromeritics, USA.

In some optional embodiments, in S20, porosity of the carbon matrix is 70% to 95%, optionally 75% to 90%. This helps the carbon matrix to deposit an appropriate amount of carbon in its porous structure, thereby allowing the prepared silicon-carbon material to have an appropriate specific capacity, and allowing the negative electrode active material film layer to have both high capacity and an appropriate porous structure, thereby allowing the battery cell to have both high energy density and good cycling performance.

The porosity of such carbon matrix material can be tested using methods known in the art. For example, a true density ρr of the carbon matrix of secondary particles can be obtained by testing with a true density tester (such as AccuPycII1340 type). Specifically, the process may include the following steps: weighing a certain mass (recorded as m) of sample, placing the sample in the true density tester, sealing a test system, and filling the helium gas according to the program; and detecting gas pressures in a sample chamber and an expansion chamber, and then calculating a true volume Vr of the carbon matrix according to Boyle's law (PV = nRT), where the true density ρr of the carbon matrix is equal to m / Vr. An apparent density of the carbon matrix can be tested by the steps of loading a certain mass (recorded as m) of the sample into a cylindrical mold with an inner diameter of 10 mm, and applying a pressure of 200 MPa to obtain an apparent volume V0 of the carbon matrix, where an apparent density ρ0 of the carbon matrix is equal to m / V0. The porosity of the carbon matrix is denoted as P, where P = (1 - ρ0 / ρr) × 100%.

In some optional embodiments, in S20, the process of performing pore-forming treatment on the carbon substrate to obtain the carbon matrix having a porous structure may specifically include:
performing pretreatment on the carbon-based material to remove impurities and surface contaminants so as to ensure a subsequent treatment effect;
selecting an appropriate pore-forming method for performing pore-forming treatment, where a common method includes a chemical method, a physical method, a biological method, and the like, and the physical method includes laser etching, electrochemical corrosion, and the like; and
washing a material after pore-forming treatment to remove residual treatment liquid and products, and then drying the material to ensure a clean material surface.

In some optional embodiments, in S30, the process of depositing silicon in the porous structure of the carbon matrix to prepare the silicon-carbon material can be performed using chemical vapor deposition (CVD), physical vapor deposition (PVD), or the like. In the chemical vapor deposition (CVD) method, a gaseous silicon source undergoes a chemical reaction to deposit and form a silicon layer on the surface or in the pore channels of the carbon-based material. In the physical vapor deposition (PVD) method, silicon atoms are deposited in the porous structure of the carbon-based material by evaporation or sputtering of a silicon source under vacuum conditions. In some optional embodiments, the gaseous silicon source includes one or more of silane, silane hydrocarbons, trimethylsilane, monosilane, propylsilane, dichlorosilane, trichlorosilane, and tetrachlorosilane.

In some optional embodiments, in the chemical vapor deposition (CVD) method, the gaseous silicon source is subjected to vapor deposition in a rotary furnace, a tube furnace, or a fluidized bed by using nitrogen or argon as a protective gas, where a flow rate of the gaseous silicon source is 0.5 L/min to 5 L/min, a flow rate of the protective gas is 0.5 L/min to 30 L/min, a temperature of the vapor deposition is 500°C to 700°C, and the time is 6 hours to 12 hours.

In some optional embodiments, after the chemical vapor deposition method, carbon layer coating is performed using solid phase or vapor deposition or other methods to improve the stability between the material and the electrolyte. A carbon source for forming the carbon layer by vapor deposition may be one or a combination of several of methane, ethylene, and acetylene. The process of forming the carbon layer by vapor deposition may include performing vapor deposition at a temperature of 500°C to 650°C, keeping the temperature for 2 h to 4 h, turning off a gas source, and cooling to obtain a spherical silicon-carbon material.

In some optional embodiments, in S40, the process of providing the slurry including the silicon-carbon material may specifically include: dispersing the silicon-carbon material and graphite, a negative electrode binder, an optional negative electrode conductive agent, and other optional auxiliaries in a solvent and stirring well to form a slurry. The solvent may be N-methylpyrrolidone (NMP) or deionized water, but is not limited thereto.

In some optional embodiments, in S50, the process of applying the slurry on the negative electrode current collector to form the negative electrode active material film layer so as to obtain the negative electrode sheet may specifically include: applying the slurry on the negative electrode current collector, and performing processes such as drying and cold pressing, and then forming the negative electrode sheet.

### [Positive electrode sheet]

In some optional embodiments, the positive electrode sheet includes a positive electrode current collector and a positive electrode active material film layer disposed on at least one surface of the positive electrode current collector and including a positive electrode active material. For example, the positive electrode current collector has two opposite surfaces in its thickness direction, and the positive electrode active material film layer is disposed on either or both of the two opposite surfaces of the positive electrode current collector.

The positive electrode active material film layer includes a positive electrode active material, and the positive electrode active material can adopt positive electrode active materials known in the art for battery cells.

For example, when the battery cell is a lithium-ion battery cell or a lithium metal battery cell, the positive electrode active material may include one or more of lithium transition metal oxide, olivine-structured lithium-containing phosphate, and respective modified compounds thereof. An example of the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. An example of the olivine-structured lithium-containing phosphate may include one or more of lithium iron phosphate, composite materials of lithium iron phosphate and carbon, lithium manganese phosphate, composite materials of lithium manganese phosphate and carbon, lithium manganese iron phosphate, a composite material with lithium manganese iron phosphate and carbon, and respective modified compounds thereof. This application is not limited to these materials, and other conventionally well-known materials that can be used as positive electrode active materials can also be used.

In some optional embodiments, to further increase the energy density of the battery cell, the positive electrode active material may include one or more of lithium transition metal oxide with a general formula LiₐNi_{b}Co_{c}M_{d}OₑA_{f} and modified compounds thereof, where 0.8 ≤ a ≤ 1.2, 0.5 ≤ b < 1, 0 < c < 1, 0 < d < 1, 1 ≤ e ≤ 2, 0 ≤ f ≤ 1, M includes one or more selected from Mn, Al, Zr, Zn, Cu, Cr, Mg, Fe, V, Ti, and B, and A includes one or more selected from N, F, S, and Cl.

As an example, the positive electrode active material may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.80}Co_{0.15}Al_{0.05}O₂, LiFePO₄, and LiMnPO₄.

The modified compounds of the above positive electrode active materials may be obtained by doping modification and/or surface coating modification on the positive electrode active materials.

In some optional embodiments, the positive electrode active material film layer further optionally includes a positive electrode conductive agent. The type of the positive electrode conductive agent is not particularly limited in this application. As an example, the positive electrode conductive agent includes one or more of superconducting carbon, conductive graphite, acetylene black, carbon black, Ketjen black, carbon dots, carbon nanotubes, graphene, and carbon nanofiber.

In some optional embodiments, the positive electrode active material film layer further optionally includes a positive electrode binder. The type of the positive electrode binder is not particularly limited in this application. As an example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some optional embodiments, the positive electrode current collector may adopt a metal foil or a composite current collector. As an example of the metal foil, an aluminum foil can be adopted. The composite current collector may include a polymer material substrate and a metal material layer formed on at least one surface of the polymer material substrate. As an example, the metal material may include one or more of aluminum, aluminum alloy, nickel, nickel alloy, titanium, titanium alloy, silver, and silver alloy. As an example, the polymer material substrate may include one or more of polypropylene (PP), polyethylene terephthalate (PET), polybutylene terephthalate (PBT), polystyrene (PS), and polyethylene (PE).

The positive electrode active material film layer is typically formed by applying a positive electrode slurry on the positive electrode current collector, followed by drying and cold pressing. The positive electrode slurry is typically formed by dispersing a positive electrode active material, an optional conductive agent, an optional binder, and any other components in a solvent and stirring well. The solvent may be N-methylpyrrolidone (NMP), but is not limited thereto.

### [Separator]

The separator is disposed between the positive electrode sheet and the negative electrode sheet and mainly functions to prevent short circuits between a positive electrode and a negative electrode. The type of the separator is not particularly limited in this application, and any known porous separator with good chemical stability and mechanical stability can be selected.

In some optional embodiments, the material of the separator may include one or more of glass fiber, non-woven fabric, polyethylene, polypropylene, and polyvinylidene fluoride. The separator may be a single-layer film or a multi-layer composite film. When the separator is a multi-layer composite film, the materials of the layers may be the same or different.

### [Electrolyte]

In some embodiments, the battery cell includes an electrolyte. The electrolyte functions to conduct active ions between the positive electrode sheet and the negative electrode sheet. The type of the electrolyte is not specifically limited in this application and can be selected according to actual needs. For example, the electrolyte can be selected from at least one of a solid-state electrolyte and a liquid-state electrolyte (for example, a liquid electrolyte).

In some optional embodiments, the electrolyte uses a liquid electrolyte. The liquid electrolyte includes an electrolytic salt and a solvent.

The type of the electrolytic salt is not specifically limited and can be selected according to actual needs. For example, the electrolytic salt includes one or more selected from lithium salts used for lithium-ion battery cells. As an example, the lithium salt includes one or more selected from lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalate)borate (LiDFOB), lithium bis(oxalate)borate (LiBOB), lithium difluorophosphate (LiPO₂F₂), lithium difluoro(dioxalato)phosphate (LiDFOP), and lithium tetrafluoro(oxalato)phosphate (LiTFOP).

The type of the solvent is not specifically limited and can be selected according to actual needs. In some optional embodiments, as an example, the solvent may include one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma butyrolactone (GBL), sulfolane (SF), dimethyl sulfone (MSM), ethyl methyl sulfone (EMS), and ethylsulfonylethane (ESE).

In some optional embodiments, the liquid electrolyte further optionally includes an additive. For example, the additive may include a negative electrode film-forming additive, a positive electrode film-forming additive, and an additive capable of performing certain performances of the battery cell, such as an additive capable of improving the overcharge performance of the battery cell, an additive capable of improving the high-temperature performance of the battery cell, and an additive capable of improving the low-temperature power performance of the battery cell.

In some optional embodiments, the battery cell may include an outer package. The outer package can be used to encapsulate the electrode assembly and electrolyte described above.

In some optional embodiments, the outer package of the battery cell may be a hard shell, such as a hard plastic shell, an aluminum shell, and a steel shell. The outer package of the battery cell may alternatively be a soft pack, for example, a soft pouch. The material of the soft pack may be plastic, such as one or more of polypropylene (PP), polybutylene terephthalate (PBT), polybutylene succinate (PBS), and the like.

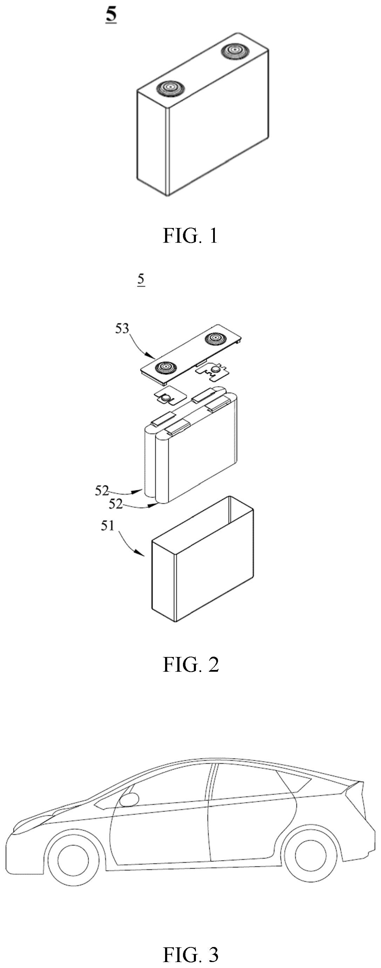

The shape of the battery cell is not particularly limited in this application, which may be flat, cuboid, or of other shapes. FIG. 1 shows a battery cell 5 with a cuboid structure as an example.

In some optional embodiments, as shown in FIG. 2, the outer package may include a housing 51 and a cover plate 53. The housing 51 may include a bottom plate and side plates connected to the bottom plate, and the bottom plate and side plates enclose to form an accommodation cavity. The housing 51 has an opening in communication with the accommodation cavity. The cover plate 53 is used to cover the opening to seal the accommodation cavity. The electrode assembly 52 according to the first aspect of the embodiments of this application or the electrode assembly 52 prepared using the method according to the second aspect of the embodiments of this application is encapsulated in the accommodation cavity. The electrolyte infiltrates the electrode assembly 52. One or more electrode assemblies 52 are included in the battery cell 5 and can be adjusted according to needs.

An embodiment of this application provides a battery cell. The battery cell can be understood as a battery cell module or a battery cell pack.

In some embodiments of this application, the battery cell according to this application can be assembled into a battery cell module. A plurality of battery cells are included in the battery cell module, and the specific number can be adjusted according to the application and capacity of the battery cell module.

Optionally, the battery cell module may further include an enclosure with an accommodation space, and a plurality of battery cells are accommodated in the accommodation space.

In some optional embodiments, the above battery cell module can also be assembled into a battery cell pack, and the number of battery cell modules included in the battery cell pack can be adjusted according to the application and capacity of the battery cell pack.

### [Preparation method]

The preparation method of the battery cell of this application is known, and the method includes at least the steps of preparing the electrode assembly according to the second aspect of the embodiments of this application.

In some optional embodiments, the positive electrode sheet, the separator, the negative electrode sheet, and the electrolyte can be assembled to form a battery cell. As an example, the positive electrode sheet, the separator, and the negative electrode sheet can be formed into an electrode assembly through a winding process and/or a stacking process. The electrode assembly is placed in an outer package, dried, and then injected with the electrolyte. After processes such as sealing, standing, formation, and shaping are performed, a battery cell is obtained. A plurality of battery cells may be further connected in series, parallel, or series-parallel to form a battery cell module. A plurality of battery cell modules may alternatively be connected in series, parallel, or series-parallel to form a battery cell pack. In some optional embodiments, a plurality of battery cells may alternatively be directly formed into a battery cell pack.

In some optional embodiments, the electrode assembly can be placed in the outer package, dried, and then injected with the electrolyte. After vacuum packaging, standing, formation, shaping, and other processes are performed, a battery cell is obtained.

### Electric apparatus

An embodiment of this application provides an electric apparatus including the above battery cell.

The battery cell can be used as a power source for an electric apparatus or an energy storage unit for an electric apparatus. The electric apparatus may be but is not limited to a mobile device (such as a mobile phone and a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite, or an energy storage system.

FIG. 3 is a schematic diagram of an electric apparatus as an example. The electric apparatus is a battery electric vehicle, a hybrid electric vehicle, a plug-in hybrid electric vehicle, or the like. To meet the demand for high power and high energy density of this electric apparatus, a battery cell pack or a battery cell module can be used.

As another example, the electric apparatus may be a mobile phone, a tablet computer, a laptop computer, or the like. This electric apparatus is typically required to be light and thin and may use a battery cell as its power source.

### Examples

The content disclosed in this application is described in detail in the following examples. These examples are only for illustrative purposes because various modifications and changes made without departing from the scope of the content disclosed in this application are apparent to those skilled in the art. Unless otherwise stated, all parts, percentages, and ratios reported in the following examples are based on mass, all reagents used in the examples are commercially available or synthesized using a conventional method, and can be used directly without further treatment, and all instruments used in the examples are commercially available.

### Example 1

### Preparation of negative electrode sheet:

Preparation of silicon-carbon material: S10. Carbonize a coke raw material to prepare a carbon substrate. Specifically, 1 kg of petroleum coke was used as a carbon source for carbonization and activation at 960°C; then under nitrogen protection, the petroleum coke activated at the temperature of 960°C was added with 45 g of sodium hydroxide for chemical activation for 6 h to 8 h; and a carbon substrate was obtained.

S20. Perform pore-forming treatment on the carbon substrate to obtain a carbon matrix having a porous structure. Specifically, steam activation was performed only for pore formation to obtain the carbon matrix. A TriStarII specific surface area analyzer was used to test, where the tested BET of the carbon matrix was 2010 m²/g, a pore volume of the carbon matrix was 0.95, and a proportion of a pore volume of micropores with a size less than or equal to 2 nm to a total pore volume was 90%.

S30. Deposit silicon in the porous structure of the carbon matrix to prepare a silicon-carbon material. Silane was used as a silicon source, and nitrogen was used as a protective gas. Vapor deposition was performed in a rotary furnace. A flow rate of silane was 4.5 L/min. A flow rate of the protective gas was 20 L/min. Vapor deposition was performed at a temperature of 560°C for 8 hours to obtain a silicon-carbon core.

The surface of the silicon-carbon core was coated with carbon to obtain a silicon-carbon material with a carbon coating layer. Specifically, acetylene gas was filled into a container of the silicon-carbon core at a flow rate of 0.01 L/min to 0.03 L/min, and the gas was filled for 2.5 h. Vapor deposition was performed at 600°C for 3 h to obtain the silicon-carbon material with the carbon coating layer. Based on a mass percentage, the silicon-carbon material included 47% of silicon element and 53% of carbon element. Dᵥ50 of the silicon-carbon material was 8 µm, the span was 1.4, and I_{D}/I_{G} was 2.0.

S40. Provide a slurry including the silicon-carbon material and graphite. Artificial graphite, the prepared silicon-carbon material, a conductive agent carbon black, carbon nanotubes (CNT), a binder styrene-butadiene rubber (SBR), a thickener sodium carboxymethyl cellulose (CMC) were added to deionized water at a mass ratio of 58:37:0.8:0.2:2.8:1.2, and then mixed and stirred for 0.5 h to 6 h to obtain the slurry. A solid content of the slurry was 45%.

S50. Apply the slurry on a negative electrode current collector to form a negative electrode active material film layer so as to obtain a negative electrode sheet. Specifically, the slurry was evenly applied on one side of the negative electrode current collector, and the slurry was applied on a copper foil with a thickness of 6 µm, followed by drying, cold pressing using a roller with a mass of 50 T, and cutting, to obtain the negative electrode sheet, where a thickness of the negative electrode active material film layer was 110 µm.

### Preparation of positive electrode sheet:

A nickel cobalt manganese (LiNi_{0.96}Co_{0.03}Mn_{0.01}O₂) ternary material, a conductive agent carbon black, and a binder polyvinylidene fluoride (PVDF) were mixed at a mass ratio of 97:1:2, and N-methylpyrrolidone was added. The materials were mixed and stirred for 0.5 h to 6 h to obtain a positive electrode slurry. A solid content of the positive electrode slurry was 60%. The positive electrode slurry was applied on an Al foil with a thickness of 13 µm, followed by drying, cold pressing, and cutting, to obtain a positive electrode sheet, where a thickness of a positive electrode active material film layer was 151 µm.

### Separator:

A 7-micrometer thick polypropylene film was used as a base film, with one side coated with a 1-micrometer thick CCS coating and a 1-micrometer PCS coating. A main component of the CCS coating included aluminum oxide, and a main component of the PCS coating included polyvinylidene fluoride.

### Electrolyte:

LiPF₆ and LIFSI were dissolved in a mixed solution of ethylene carbonate (EC), ethyl methyl carbonate (DEC), diethyl carbonate, and fluoroethylene carbonate (FEC). A volume ratio of ethylene carbonate, ethyl methyl carbonate, diethyl carbonate, and fluoroethylene carbonate was 1:1:1:1. Concentrations of LiPF₆ and LIFSI were 0.6 mol/L and 0.4 mol/L, respectively. An electrolyte was prepared.

The above positive electrode sheet, separator, and negative electrode sheet were wound in sequence to obtain a jelly roll. The jelly roll was placed in a packaging shell. After drying, an electrolyte was injected. After processes such as vacuum packaging, standing, formation, and shaping were performed, a lithium-ion battery cell with dimensions of 148 mm × 97.5 mm × 28 mm was obtained.

### Examples 2-1 to 2-4

These examples differed from Example 1 in that the carbonization and activation temperature of the petroleum coke, the concentration of the added sodium hydroxide, and the physical activation time were adjusted as shown in Table 1 to prepare silicon-carbon materials with different average strengths. The average strengths of the silicon-carbon materials were shown in Table 1.

### Examples 3-1 and 3-2

These examples differed from Example 1 in that control was performed at a flow rate of 4 L/min due to differences in the flow rate and time of silicon deposition, so that silicon-carbon contents of the silicon-carbon materials were different, as shown in Table 1.

### Examples 4-1 to 4-4

These examples differed from Example 1 in that the silicon-carbon material in Example 1 was used for preparing the negative electrode sheets, the rolling pressure was controlled by changing the mass of the rollers used during rolling, and the prepared negative electrode sheets had different compacted densities and elongations, as shown in Table 1.

### Examples 5-1 to 5-3

These examples differed from Example 1 in that the components, contents, viscosities, and conductivities of the electrolyte were different. In Example 5-3, the electrolyte included a lithium salt and a solvent. The lithium salt included LiPF₆ and LIFSI with concentrations of 0.6 mol/L and 0.4 mol/L respectively. The solvent included ethyl acetate, EC, FEC, and DEC at a volume ratio of 3:1:3:3. In Example 5-2, the electrolyte included a lithium salt and a solvent. The lithium salt included LiPF₆ and LIFSI with concentrations of 0.64 mol/L and 0.36 mol/L respectively. The solvent included ethyl acetate, EC, FEC, and DEC at a volume ratio of 2.5:1.5:3.3:2.7. In Example 5-1, the electrolyte included a lithium salt and a solvent. The lithium salt included LiPF₆ and LIFSI with concentrations of 0.68 mol/L and 0.32 mol/L respectively. The solvent included ethyl acetate, EC, FEC, and DEC at a volume ratio of 2.3:1.7:3.5:2.5. The viscosities and conductivities of the electrolytes in the above examples were different, as shown in Table 2.

### Comparative Example 1

This comparative example differed from Example 1 in the preparation of the silicon-carbon material: a coconut shell, as a biomass material, was used as a raw material, and the carbonization and activation temperature of the coconut shell, the concentration of the added sodium hydroxide, and the physical activation time were adjusted, as shown in Table 1.

### Comparative Example 2

This comparative example differed from Example 1 in the preparation of the silicon-carbon material: phenolic resin was used as a raw material, and the carbonization and activation temperature of the phenolic resin, the concentration of the added sodium hydroxide, and the physical activation time were adjusted, as shown in Table 1.

### Comparative Example 3

This comparative example differed from Example 1 in the preparation of the silicon-carbon material: the carbonization and activation temperature of the petroleum coke, the concentration of the added sodium hydroxide, and the physical activation time were adjusted to prepare silicon-carbon materials with different average strengths, as shown in Table 1.

### Tests

1. Test method for powder resistivity of silicon-carbon material: 1g of silicon-carbon material powder sample was taken. Then, the powder sample was placed between electrodes of a resistivity tester, pressed by an electronic press at a constant pressure to a test pressure (for example, 4 MPa), and maintained for 15s to 25s to obtain a sheet-like sample. The powder resistivity δ of the material was calculated according to the formula δ = (S × R) / h, in Ω·cm, where h represented a height of the sheet-like sample, in cm; R represented resistance, in Ω; and S represented an area of the sheet-like sample, in cm².
2. Test method for average strength of silicon-carbon material: The silicon-carbon material powder passed through a Japanese Shimazuwa MCT series micro compression testing machine. Two indicators were used to clamp a single-particle sample of the powder therebetween. A diameter d of the single-particle sample was recorded, in mm. The sample was tested in 200 micron increments down to 0.1 micron, with a test compression force of 9.8 mN to 4903 mN, until the silicon-carbon material fractured. An experimental force P at this point was recorded, in N. The average strength was taken as the average value, in MPa. The average strength was equal to 2.8 × P / (πd²).
3. Test method for compacted density of negative electrode sheet: A coated and cold-pressed negative electrode sheet was taken, a negative electrode active material film layer on one side was removed, and then the negative electrode sheet was punched into a small disc with an area of S1. Then, a weight was measured and recorded as M1. Then, the negative electrode active material film layer of the above weighed negative electrode sheet was wiped off, and a weight of a negative electrode current collector was measured and recorded as M0. An areal density of the negative electrode sheet was equal to (M1 - M0) / S1. The compacted density of the negative electrode active material film layer was equal to the areal density of the negative electrode active material film layer / the thickness of the negative electrode active material film layer. The thickness of the negative electrode active material film layer had a meaning well known in the art and was measured using a Mitutoyo 293-100 micrometer with an accuracy of 0.1 µm.
3. Test method for elongation at break of negative electrode sheet: A negative electrode sheet was taken out from a cell, an electrolyte was added such that the electrode sheet was completely immersed in the electrolyte, and the electrode sheet was stored at 90°C for more than 48 h. Then, the electrode sheet was taken out, and a film layer of the negative electrode sheet could be peeled off from a current collector.

The negative electrode sheet was taken and the current collector was removed, and the film layer after removal of the current collector was made into a sample with a width of 15 mm and a length of 50 mm. An air pressure of a device was set to 2 MPa. Then, the sample was fixed on a tensile machine (model AI7000), with one layer of yellow Teflon pasted on upper and lower clamps, and the yellow Teflon was replaced once per shift to prevent slippage of the electrode sheet. An initial length was recorded as L0. The tensile machine test was started for testing. Testing was performed under a pressure of 1.3 MPa to 1.6 MPa until the sample fractured. A displacement L1 of the sample at fracture was read from the tensile machine. The elongation was equal to (L1 - L0) / L0 * 100%.

(4) Test method for volumetric energy density of battery cell: At 25°C, the secondary battery cell prepared in each of the examples and comparative examples was subjected to charge-discharge tests at 1/3C to 1/3C (a test instrument could use a Neware tester), with a voltage range of 2.8 V to 4.3 V. The energy released in the first cycle of the battery cell was recorded and then divided by the volume of the battery cell to obtain the volumetric energy density of the battery cell, in Wh/L.

5. Test method for cycling performance of battery cell: The battery cell prepared in each of the examples and comparative examples was placed in a test channel of a CHI electrochemical workstation, charged at a constant current of 1C to a charge cut-off voltage of 3.7 V, left standing for 5 min, and then discharged at a constant current of 1C to a discharge cut-off voltage of 2.0 V. The number of cycles was recorded. Then, the battery cell was left standing for 5 min. This cycle was repeated until the capacity decayed to 80% of a discharge capacity of the first cycle, and the number of cycles of the battery cell was recorded.

6. Test for fast charging performance of battery cell: The battery was subjected to charge-discharge tests according to the following test process.
(1) Rest for 60 min at 25°C at a sampling interval of 10s (rest for 60 min).
(2) Discharge at DC of 1/3C0 to 2.5 V at 25°C at a sampling interval of 10s (discharge at a constant current of 1/3C to 2.5 V).
(3) Rest for 5 min at 25°C at a sampling interval of 10s (rest for 5 minutes).
(4) Charge at CC of 0.4C0 to 4.25 V at 25°C at a sampling interval of 10s (jump when anode potential reached 0 mV).
(5) Rest for 5 min at 25°C at a sampling interval of 10s (rest for 25 minutes).
(6) Discharge at DC of 1/3C0 to 2.5 V at 25°C at a sampling interval of 10s (discharge at a constant current of 1/3C to 2.5 V).
(7) Rest for 5 min at 25°C at a sampling interval of 10s (rest for 25 minutes).
(8) Charge at CC of 0.6C0 to 4.25 V at 25°C at a sampling interval of 10s (jump when anode potential reached 0 mV).
(9) Rest for 5 min at 25°C at a sampling interval of 10s (rest for 25 minutes).
(10) Discharge at DC of 1/3C0 to 2.5 V at 25°C at a sampling interval of 10s (discharge at a constant current of 1/3C to 2.5 V).
(11) Rest for 5 min at 25°C at a sampling interval of 10s (rest for 5 minutes).
(12) Charge at CC of 0.8C0 to 4.25 V at 25°C at a sampling interval of 10s (jump when anode potential reached 0 mV).
(13) Rest for 5 min at 25°C at a sampling interval of 10s (rest for 25 minutes).
(14) Discharge at DC of 1/3C0 to 2.5 V at 25°C at a sampling interval of 10s (discharge at a constant current of 1/3C to 2.5 V).
(15) Rest for 5 min at 25°C at a sampling interval of 10s (rest for 25 minutes).
(16) Charge at CC of 1.0C0 to 4.25 V at 25°C at a sampling interval of 10s (jump when anode potential reached 0 mV).
(17) Rest for 5 min at 25°C at a sampling interval of 10s (rest for 5 minutes).
(18) Discharge at DC of 1/3C0 to 2.5 V at 25°C at a sampling interval of 10s (discharge at a constant current of 1/3C to 2.5 V).
(19) Rest for 5 min at 25°C at a sampling interval of 10s (rest for 5 minutes). Fitting was performed to obtain a charging time in Table 1 and a curve in FIG. 5. This test process was performed at a charging capacity of 5%. This charging process ensured an extremely low lithium precipitation amount.

The test results were shown in Table 1.

**Table 1**

| Item | Preparation process of silicon-carbon material | | | | | Silicon-carbon material | | | Negative electrode sheet | | Battery | | |
|---|---|---|---|---|---|---|---|---|---|---|---|---|---|
| | Raw material | Preparation parameters | | | | Average strength (MPa) | Powder resistivity (Ω·cm) | Mass percentage of silicon | Compacted density (g/cm³) | Elongation | Volumetric energy density (Wh/L) | Cycles | Charging time |
| | | Carbonization and activation temperature | Alkali concentration (mol/L) | Physical activation time (h) | Rolling mass (T) | | | | | | | | (min) |
| Example 1 | Petroleum coke | 960 | 1.5 | 12 | 50 | 6 | 1.6 | 47% | 1.3 | 1.50% | 821 | 1924 | 9 |
| Example 2-1 | Petroleum coke | 950 | 1.4 | 11 | 50 | 4 | 1.73 | 47% | 1.4 | 1.70% | 833 | 1908 | 12 |
| Example 2-2 | Petroleum coke | 940 | 1.3 | 10 | 50 | 8 | 1.82 | 47% | 1.5 | 1.90% | 842 | 1885 | 12.9 |
| Example 2-3 | Petroleum coke | 930 | 1.1 | 9 | 50 | 2 | 1.85 | 47% | 1.6 | 2.20% | 850 | 1688 | 13 |
| Example 2-4 | Petroleum coke | 940 | 1.3 | 8 | 50 | 15 | 1.78 | 47% | 1.5 | 1.90% | 841 | 1883 | 11 |
| Example 3-1 | Petroleum coke | 960 | 1.5 | 12 | 50 | 6 | 1.6 | 40% | 1.3 | 1.49% | 818 | 1928 | 8.5 |
| Example 3-2 | Petroleum coke | 960 | 1.5 | 12 | 50 | 6 | 1.6 | 60% | 1.45 | 2.10% | 843 | 1682 | 10.8 |
| Example 4-1 | Petroleum coke | 960 | 1.5 | 12 | 53 | 6 | 1.6 | 47% | 1.5 | 1.70% | 834 | 1829 | 13 |
| Example 4-2 | Petroleum coke | 960 | 1.5 | 12 | 55 | 6 | 1.6 | 47% | 1.6 | 1.90% | 840 | 1803 | 15 |
| Example 4-3 | Petroleum coke | 960 | 1.5 | 12 | 61 | 6 | 1.6 | 47% | 1.65 | 2.20% | 846 | 1726 | 16 |
| Example 4-4 | Petroleum coke | 960 | 1.5 | 12 | 65 | 6 | 1.6 | 47% | 1.7 | 2.50% | 853 | 1468 | 17 |
| Comparative Example 1 | Coconut shell | 910 | 0.5 | 6 | 50 | 4 | 30.7 | 47% | 1.54 | 0.70% | 802 | 1062 | 25 |
| Comparative Example 2 | Phenolic resin | 900 | 0.8 | 8 | 50 | 4 | 33 | 47% | 1.52 | 0.60% | 805 | 1087 | 26 |
| Comparative Example 3 | Petroleum coke | 860 | 1.3 | 9 | 50 | 18 | 11 | 47% | 1.25 | 1.60% | 812 | 1121 | 23 |

**Table 2**

| Item | Electrolyte | | Negative electrode sheet | | Battery |
|---|---|---|---|---|---|
| | Viscosity (mPa·s) | Conductivity (mS/cm) | Compacted density (g/cm³) | Elongation | Charging time (min) |
| Example 1 | 3.73 | 11 | 1.3 | 1.50% | 13.1 |
| Example 5-1 | 3.22 | 12 | 1.3 | 1.50% | 11.3 |
| Example 5-2 | 2.98 | 13 | 1.3 | 1.50% | 10.5 |
| Example 5-3 | 2.51 | 14 | 1.3 | 1.50% | 9 |

It can be seen from Table 1 that for the silicon-carbon material prepared from petroleum coke using a specific process, the silicon-carbon material has average strength and powder resistivity in appropriate ranges, allowing the battery cell to have excellent volumetric energy density, cycle life, and charge-discharge performance.

In Example 2-1, petroleum coke is used as the raw material. As compared with Comparative Example 1, even if the coconut shell as the raw material has the same average strength as that in Example 2-1, the powder resistivity of Comparative Example 1 is higher, the graphitization intensity of carbon is lower, and the coconut shell has sharp edges and corners, resulting in relatively low volumetric energy density, relatively short cycle life, and relatively low charge-discharge performance.

In Example 2-1, petroleum coke is used as the raw material. As compared with Comparative Example 2, even if phenolic resin as the raw material has the same average strength as that in Example 2-1, the powder resistivity of Comparative Example 1 is higher, the graphitization intensity of carbon is lower, and the coconut shell has sharp edges and corners, resulting in relatively low volumetric energy density, relatively short cycle life, and relatively low charge-discharge performance of the battery.

In Example 1, petroleum coke is used as the raw material. As compared with Comparative Example 3, the average strength of the silicon-carbon material in Comparative Example 3 is higher, but the powder resistivity of Comparative Example 3 is higher, the graphitization intensity of carbon is lower, and the coconut shell has sharp edges and corners, resulting in relatively low volumetric energy density, relatively short cycle life, and relatively low charge-discharge performance of the battery.

In Example 1 and Examples 2-1 to 2-4, the average strengths of the silicon-carbon materials are higher and the powder resistivities are different. As compared with Comparative Example 3, the battery still has high volumetric energy density, long cycle life, and good charge-discharge performance.

In Examples 3-1 and 3-2, the silicon contents of the silicon-carbon materials are different. As compared with Example 1, the volumetric energy density, cycle life, and charge-discharge performance of the battery are affected.

In Examples 4-1 to 4-4, the silicon-carbon material in Example 1 is used for preparing the negative electrode sheets with different compacted densities. The batteries including the negative electrode sheets with different compacted densities and elongations at break each have improved volumetric energy density, cycle life, and charge-discharge performance.

In Examples 5-1 to 5-3, the negative electrode sheet in Example 1 is used, and electrolytes with different components and addition proportions are used, making the viscosities and conductivities of the electrolytes different. Compared with the electrolyte of Example 1, the electrolytes of Examples 5-1 to 5-3 have higher viscosities and conductivities, improving the charge-discharge performance of the battery.

A lithium precipitation window of the battery including the silicon-carbon material in each of Example 2-1 and Comparative Example 2 is shown in FIG. 5, which is obtained by the test method of the above fast charging performance of the battery cell, indicating that Example 2-1 has better rate performance than Comparative Example 2.

It should be noted that this application is not limited to the above embodiments. The foregoing embodiments are merely examples, and the embodiments having substantially the same constructions and the same effects as the technical idea within the scope of the technical solutions of this application are all included in the technical scope of this application. In addition, without departing from the essence of this application, various modifications made to the embodiments that can be conceived by those skilled in the art, and other manners constructed by combining some of the constituent elements in the embodiments are also included in the scope of this application.

## Claims

1. A battery cell, comprising a negative electrode sheet, wherein the negative electrode sheet comprises a negative electrode current collector and a negative electrode active material film layer disposed on at least one side of the negative electrode current collector; the negative electrode active material film layer comprises a silicon-carbon material; average strength of the silicon-carbon material is 2 MPa to 15 MPa; and powder resistivity of the silicon-carbon material is 1 Ω·cm to 5 Ω·cm.

2. The battery cell according to claim 1, wherein the average strength of the silicon-carbon material is 5 MPa to 8 MPa.

3. The battery cell according to claim 1 or 2, wherein the silicon-carbon material comprises a carbon matrix having a porous structure and a silicon-based material located in the porous structure of the carbon matrix.

4. The battery cell according to claim 3, wherein the silicon-based material comprises one or more of elemental silicon, silicon oxide, a silicon-carbon material, and a silicon alloy material.

5. The battery cell according to any one of claims 1 to 4, wherein the silicon-carbon material satisfies any one or more of the following conditions:
(1) a tap density of the silicon-carbon material is 0.96 g/cm³ to 1.10 g/cm³;
(2) a volume-based particle size Dᵥ50 of the silicon-carbon material is 3 µm to 11 µm;
(3) a particle size distribution span SPAN of the silicon-carbon material is 0.9 to 2;
(4) average sphericity B of the silicon-carbon material is 0.9 ≤ B < 1;
(5) for carbon in a Raman spectrum of the silicon-carbon material, a peak intensity ID of a D peak and a peak intensity IG of a G peak satisfy 1.5 < I_{D}/I_{G} < 2.5; and
(6) based on a mass percentage, the silicon-carbon material comprises 40% to 60% of silicon element and 40% to 60% of carbon element.

6. The battery cell according to any one of claims 1 to 5, wherein the negative electrode active material film layer comprises graphite, and a mass ratio of the graphite to the silicon-carbon material is 1:(0.66 to 1.5).

7. The battery cell according to any one of claims 1 to 6, wherein the negative electrode active material film layer comprises a binder and a conductive agent.

8. The battery cell according to any one of claims 1 to 7, wherein the negative electrode sheet satisfies any one or both of the following conditions:
(1) a compacted density of the negative electrode active material film layer is 1.3 g/cm³ to 1.7 g/cm³; and
(2) an elongation at break of the negative electrode sheet under a pressure of 1.3 MPa to 1.6 MPa is 1.5% to 3%.

9. The battery cell according to any one of claims 1 to 8, wherein the battery cell comprises an electrolyte, and the electrolyte satisfies one or more of the following conditions:
(1) viscosity of the electrolyte is 2 mPa·s to 15 mPa·s;
(2) conductivity of the electrolyte is 9 mS/cm to 15 mS/cm; and
(3) the electrolyte comprises an acetate compound, wherein the acetate compound comprises one or more of methyl acetate, ethyl acetate, and propyl acetate.

10. A preparation method of a battery cell, comprising:
winding an assembly comprising a negative electrode sheet to obtain a battery cell, wherein the negative electrode sheet comprises a negative electrode current collector and a negative electrode active material film layer disposed on at least one side of the negative electrode current collector; the negative electrode active material film layer comprises a silicon-carbon material; average strength of the silicon-carbon material is 2 MPa to 15 MPa; and powder resistivity of the silicon-carbon material is 1 Ω·cm to 5 Ω·cm.

11. A silicon-carbon material, wherein the silicon-carbon material comprises a carbon matrix having a porous structure and a silicon-based material located in the porous structure of the carbon matrix; average strength of the silicon-carbon material is 2 MPa to 15 MPa; and powder resistivity of the silicon-carbon material is 1 Ω·cm to 5 Ω·cm.

12. A preparation method of a silicon-carbon material, comprising:
performing pore-forming treatment on a carbon substrate to obtain a carbon matrix having a porous structure; and
depositing silicon in the porous structure of the carbon matrix to prepare a silicon-carbon material, wherein powder resistivity of the silicon-carbon material is 1 Ω·cm to 5 Ω·cm; and average strength of the silicon-carbon material is 2 MPa to 15 MPa.

13. An electric apparatus, comprising the battery cell according to any one of claims 1 to 9 or a battery cell prepared using the preparation method according to claim 10.
